# EUROPEAN PATENT APPLICATION

(11) **EP 3 373 212 A1**
(43) Date of publication of application: **12.09.2018**
(21) Application number: 16861925.2
(22) Date of filing: 19.10.2016
(51) Int. Cl.: G06Q 10/02

(54) **RESERVATION PROCESSING DEVICE, RESERVATION PROCESSING METHOD, AND RESERVATION PROCESSING PROGRAM**

(30) Priority: 02.11.2015 JP 2015215980
(71) Applicant: Recruit Holdings Co., Ltd., Tokyo 104-0061 (JP)
(72) Inventor: YUMIBA, Hirotsugu, Tokyo 100-6640 (JP)
(74) Representative: EIP
(86) International application number: PCT/JP2016/080925
(87) International publication number: WO 2017/077860

(57) **Abstract**

The present invention allows a user to reserve a plurality of events in different categories collectively. A reservation processing apparatus stores reservation event information at least containing event identification information that specifies an event to be reserved, a category of the event, a place to offer the event and time to offer the event, allows a user to designate a search condition, the search condition at least including a search starting-point condition that specifies a starting point of searching, a search ending-point condition that specifies an ending point of searching and a plurality of categories that the user wants to reserve, refers to the stored reservation event information and specifies events that can be reserved based on the designated search starting-point condition and search ending-point condition and events that correspond to the designated plurality of categories; and shows the specified plurality of events to the user as the events that can be reserved collectively.

## Description

### Cross Reference to Related Applications

The present application is based on Japanese Patent Application No. 2015-215980 filed November 2, 2015, the contents of which are incorporated herein by reference.

### Technical Field

The present invention relates to a reservation processing apparatus, a reservation processing method and a reservation processing program.

### Background Art

A conventional reservation system is prepared for each service provider, and such a created reservation system typically accepts reservation for the events of the provider. Patent Document 1 discloses a reservation system for driving school. This reservation system accepts reservation for lessons at driving school.

### Citation List

### Patent Document

Patent Document 1: JP 2002-56106 A

### Summary of Invention

A user can reserve evens at a driving school with the reservation system described in Patent Document 1, but cannot reserve an event at a place other than the driving school. When a user wants to dine out at a restaurant after a lesson at the driving school, for example, it is convenient for the user to reserve the restaurant and the lesson at the driving school together with a system.

In order to satisfy the demand, the present invention aims to provide a reservation processing apparatus, a reservation processing method and a reservation processing program, which allow a user to collectively reserve a plurality of events in different categories.

A reservation processing apparatus as one aspect of the present invention includes means for storing reservation event information at least containing event identification information that specifies an event to be reserved, a category of the event, a place to offer the event and time to offer the event; means for allowing a user to designate a search condition, the search condition at least including a search starting-point condition that specifies a starting point of searching, a search ending-point condition that specifies an ending point of searching and a plurality of categories that the user wants to reserve; means for referring to the stored reservation event information and specifying events that can be reserved based on the designated search starting-point condition and search ending-point condition and events that correspond to the designated plurality of categories; and means for showing the specified plurality of events to the user as the events that can be reserved collectively.

The search starting-point condition may include time and a place as a starting point of searching, and the search ending-point condition may include time and a place as an ending point of the searching.

The means for specifying for the events may include: means for calculating travel time required to travel between the place as the starting point of the searching, a place to offer one or more of the events, and the place as the ending point of the searching; means for calculating a range of area to be searched based on the travel time, the time as the starting point of the searching, the time as the ending point of the searching, and the time to offer the events; means for detecting, from the reservation event information, events that are offered in the range of area to be searched, events that correspond to the designated plurality of categories, and events that can be reserved between the time as the starting point of the searching and the time as the ending point of the searching; and means for specifying a combination of a plurality of events that satisfy the search starting-point condition, the search ending-point condition and the designated plurality of categories from the detected events.

The means for showing the events may display and show the specified plurality of events in chronological order.

The reservation processing apparatus may further include means for accepting reservation of the displayed plurality of events.

The reservation processing apparatus may further include means for managing the accepted reservation of the plurality of events as one collective reservation.

A reservation processing method as one aspect of the present invention is executed by a computer including a storage device configured to store reservation event information at least containing event identification information that specifies an event to be reserved, a category of the event, a place to offer the event and time to offer the event. The reservation processing method includes: a step of allowing a user to designate a search condition, the search condition at least including a search starting-point condition that specifies a starting point of searching, a search ending-point condition that specifies an ending point of searching and a plurality of categories that the user wants to reserve; a step of referring to the stored reservation event information and specifying events that can be reserved based on the designated search starting-point condition and search ending-point condition and events that correspond to the plurality of categories designated; and a step of showing the specified plurality of events to the user as the events that can be reserved collectively.

A reservation processing program as one aspect of the present invention makes a computer function as: means for storing reservation event information at least containing event identification information that specifies an event to be reserved, a category of the event, a place to offer the event and time to offer the event; means for allowing a user to designate a search condition, the search condition at least including a search starting-point condition that specifies a starting point of searching, a search ending-point condition that specifies an ending point of searching and a plurality of categories that the user wants to reserve; means for referring to the stored reservation event information and specifying events that can be reserved based on the designated search starting-point condition and search ending-point condition and that correspond to the designated plurality of categories; and means for showing the specified plurality of events to the user as the events that can be reserved collectively.

### Advantageous Effects of Invention

The present invention allows a user to reserve a plurality of events in different categories collectively.

### Brief Description of Drawings

Fig. 1 shows the configuration of a reservation processing system including a reservation processing server in one embodiment.
Fig. 2 shows the configuration of the reservation processing server in Fig. 1.
Fig. 3 shows one example of a search screen displayed on a reservation receptionist terminal.
Fig. 4 shows one example of a reservation candidate screen displayed on a reservation receptionist terminal.

### Description of Embodiments

Referring to the drawings, the following describes one embodiment of the present invention in details. Like numerals indicate like elements, and their repeated description is omitted.

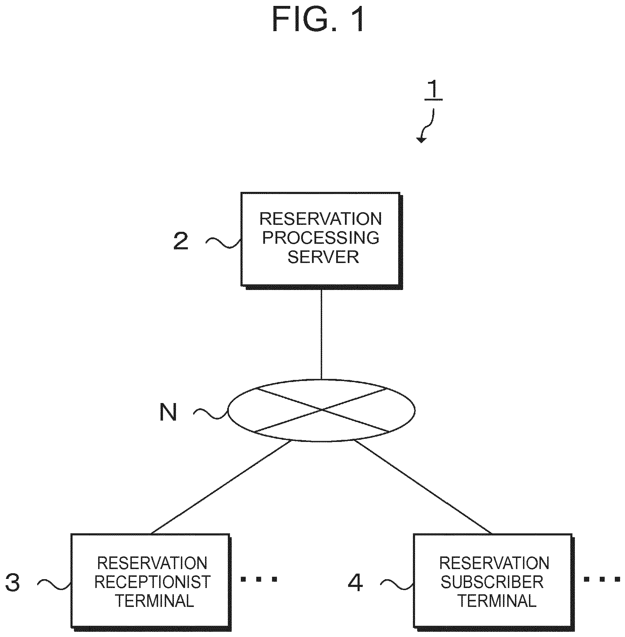

Fig. 1 schematically shows the configuration of a reservation processing system including a reservation processing server (reservation processing apparatus) according to one embodiment of the present invention. As shown in this drawing, the reservation processing system 1 of the present embodiment includes a reservation processing server 2, one or more reservation receptionist terminals 3, and one or more reservation subscriber terminals 4. The reservation receptionist terminals 3 and the reservation subscriber terminals 4 can communicate with the reservation processing server 2 via a network N.

The reservation receptionist terminal 3 is a terminal for a service provider to accept the reservation of an event described later, and the service provider uses this terminal as the receptionist of the reservation. The service provider who can be the receptionist of reservation may be a provider of any business type and in any business category.

The reservation subscriber terminal 4 is a terminal for a user to subscribe the reservation of an event and receive a service, and the user uses this terminal as the subscriber of the reservation.

The event may be of any type that can be reserved. For instance, an event can be specified by reservation event information, and the reservation event information is created by setting a reservation slot. The reservation event information is described later in details. A method for setting a reservation slot can be specified based on the type of reservation acceptance, for example. Examples of the types of reservation acceptance include a presetting type and a free accepting type described later. Any other types of reservation acceptance may be used.

The presetting type is to accept reservation from a subscriber, and in this case, the user reserves an event using a reservation slot that the receptionist sets beforehand. The free accepting type is to accept reservation from a subscriber, and in this case, the subscriber sets a desired reservation slot in a service-offering time that the receptionist sets.

Before setting a reservation slot, the receptionist of reservation may register the following items, for example. The items may include a menu item to specify a service that the reservation receptionist offers, a resource item that is a resource (e.g., human resources, facility, or equipment) of a service to be offered, a resource group item to which the resources can belong, a capacity item to specify the number of persons who can be accepted, a date and time item when reservation can be accepted, and a fee item.

In the presetting type, the reservation receptionist may set a menu item and a time zone where the receptionist offers a service corresponding to the menu item so as to set a reservation slot, for example.

In the free-accepting type, the reservation receptionist may set a time to offer a service, and the reservation subscriber may choose a desired time zone from the time to offer the service to set a reservation slot, for example.

The present embodiment includes, but not limited to, PCs (personal computers) as the reservation receptionist terminal 3 and the reservation subscriber terminal 4. For instance, a laptop PC, a tablet, a smartphone, a mobile phone, a portable digital assistant (PDA) or other terminals may be used for the reservation receptionist terminal 3 and the reservation subscriber terminal 4.

The reservation processing server 2 may include a computer having high performance of arithmetic processing, for example, and a predetermined program for server running on this computer implements the server function. The reservation processing server 2 does not always include one computer, but may include a plurality of computers distributed over the network N.

The network N includes a communication network enabling the exchange of information between the reservation processing server 2 and the reservation receptionist terminal 3 or the reservation subscriber terminal 4. The network N may be the internet, LAN, an exclusive line, a phone line, an intranet, a mobile communication network, Bluetooth, WiFi (Wireless Fidelity), or other communication lines as well as the combination of them, and may be wired or wireless.

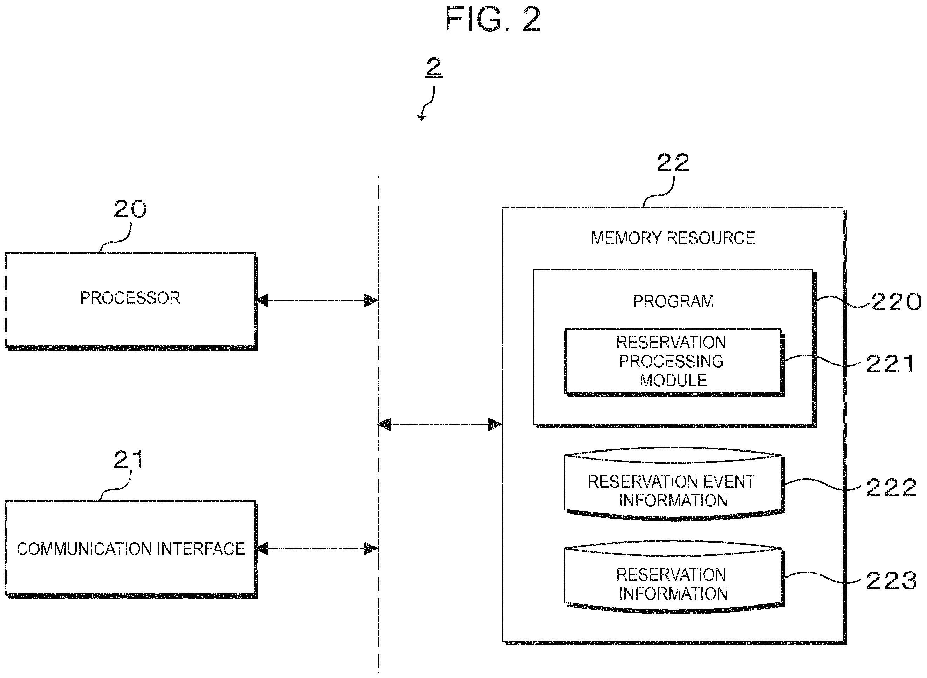

As shown in Fig. 2, the reservation processing server 2 includes a processor 20, a communication interface 21 and a memory resource 22, for example.

The processor 20 includes an arithmetic and logic unit to perform arithmetic operation, logical operation and bit operation, for example, and various types of registers. The processor executes a computer program 220 stored in the memory resource 22 to implement various types of functions described later. Examples of the registers include a program counter, a data register, an instruction register, and a general register.

The communication interface 21 is a hardware module that connects to the network N and to communicate with other terminals on the network N. The communication interface 21 may be a modulator-demodulator (modem), such as an ISDN modem, an ADSL modem, a cable modem, an optical modem, or a software modem.

The memory resource 22 is a logical device that a memory area of a physical device provides, for example. The physical device may be a computer readable recording medium, such as a disk drive or a semiconductor memory. The memory resource 22 may be constructed by mapping a plurality of physical devices with one logical device or by mapping one physical device with a plurality of logical devices. The memory resource 22 stores the computer program 220.

The memory resource 22 stores an operating system program to be used for processing at the reservation processing server 2, a driver program and other various types of data as well as the computer program 220. The driver program may be a communication interface driver program, for example, to control the communication interface 21. Various types of data may include reservation event information 222 on events to be reserved that the reservation receptionist registers and reservation information 223 that the reservation subscriber inputs, for example.

The computer program 220 is to perform predetermined processing, and includes a plurality of software modules that are fetched and executed as needed during the operation of a main program of the reservation processing server 2. These software modules are a modular subprogram to execute the processing specific to each module, and are created using procedure, subroutine, method, function and data structure, for example.

The computer program 220 may have a reservation processing module 221, for example. The following describes functions that are implemented by executing the reservation processing module 221.

The reservation processing module 221 receives an account registered by the reservation receptionist. To start the reservation processing system 1 for use, the reservation receptionist accesses a predetermined Web page of the reservation processing server 2 with the reservation receptionist terminal 3 to register an account as the reservation receptionist. To register the account, the reservation receptionist registers information on themselves, such as a user ID, a password, a mail address, a name, and a business type/business category.

The reservation processing module 221 allows the reservation receptionist who registered the account to register reservation event information 222 on events to be reserved. The reservation event information 222 may contain event identification information to specify an event, the category of the event, a place to offer the event, a time to offer the event, and a fee for the event, for example.

The event identification information may contain an event ID and an event name, for example.

The categories of events may be set corresponding to business types/business categories or corresponding to types of services to be offered, for example. Specifically they include restaurants, hospitals, schools, fitness facilities, and various types of menus offered by restaurants (e.g., tenpura soba, zaru soba and the like offered by soba noodle restaurants). Each category may have a multi-layered structure if needed. For instance, when the category is restaurants, the lower layer of the restaurants may include restaurants, cafes and pubs. The lower layer of restaurants may include Japanese-style, Chinese-style, and Western-style, and the lower layer of Japanese-style may include sushi restaurants, soba noodle restaurants, and tenpura restaurants.

The reservation processing module 221 shows the candidates of events that can be reserved collectively to the reservation subscriber during the manipulation of the reservation subscriber terminal 4. The following describes the procedure to show the candidates of events that can be reserved collectively to the reservation subscriber.

Firstly the reservation processing module 221 encourages the reservation subscriber to designate a search condition to specify events that can be reserved collectively. Examples of the search condition may include a search starting-point condition, a search ending-point condition and a plurality of categories that the reservation subscriber wants to reserve.

The search starting-point condition specifies the starting point of searching. For the search starting-point condition, time and a place for the starting point of searching may be set, for example. The search ending-point condition specifies the ending point of searching. For the search ending-point condition, time and a place for the ending point of searching may be set, for example.

Subsequently the reservation processing module 221 refers to the reservation event information 222 based on the search condition designated by the reservation subscriber to specify events that the reservation subscriber can reserve collectively. Specifically the reservation processing module 221 selects events that can be reserved from the reservation event information 222 based on the search starting-point condition and the search ending-point condition designated by the reservation subscriber, and narrows the search to events corresponding to the plurality of categories designated by the reservation subscriber, thus specifying events that can be reserved collectively.

More specifically, the reservation processing module 221 calculates the travel time required to travel between the search starting-point place, the search ending-point place and places to offer one or more events. The reservation processing module 221 specifies events that can be reserved collectively based on the search starting-point time, the search ending-point time, the time to offer the events, and the calculated travel time. Specifically the reservation processing module 221 specifies events that can be reserved collectively through the procedure including the following (1) to (3):
(1) the reservation processing module calculates the range of area to be searched based on the travel time, the search starting-point time, the search ending-point time, and the time to offer the events; (2) the reservation processing module detects, from the reservation event information 222, events that are offered in the range of area to be searched, events that correspond to the plurality of categories designated by the reservation subscriber, and events that can be reserved between the search starting-point time to the search ending-point time; and (3) the reservation processing module combines a plurality of events among the detected events that satisfies the search starting-point condition, the search ending-point condition, and the plurality of categories designated by the reservation subscriber, and specifies the combined events as events that can be reserved collectively.

Subsequently the reservation processing module 221 shows the specified plurality of events as the candidates of events that can be reserved collectively to the reservation subscriber.

After that, the reservation processing module 221 receives the reservation for the plurality of events shown to the reservation subscriber from the reservation subscriber terminal 4.

The reservation processing module 221 manages the reservation for the plurality of events received from the reservation subscriber terminal 4 as one collective reservation. Specifically the reservation processing module 221 associates the information on reservation for the plurality of events, and stores the associated information as one piece of reservation information 223 in the memory resource 22 of the reservation processing server 2.

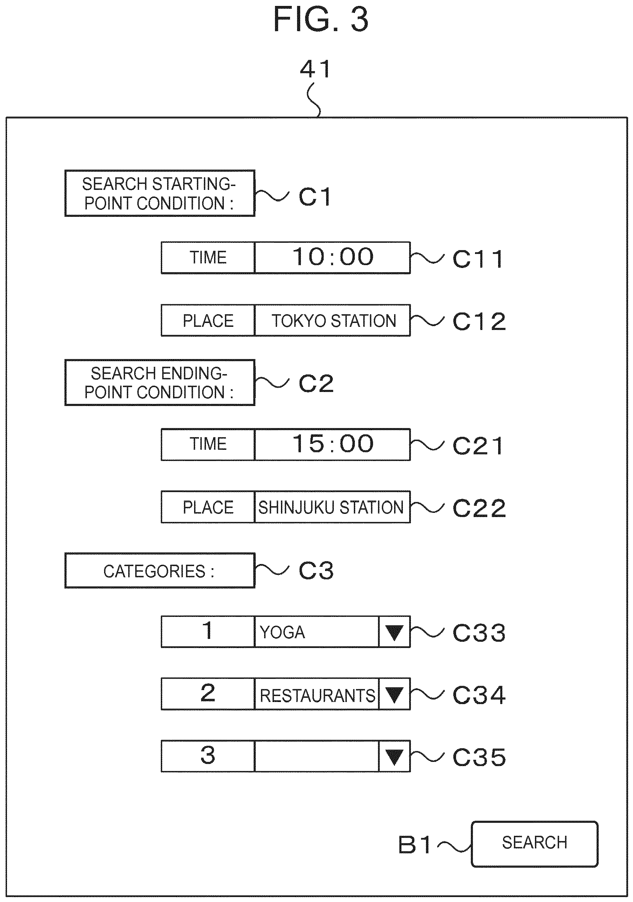

Referring next to Fig. 3, the following specifically describes the function to allow the reservation subscriber to designate the search condition so as to specify events that can be reserved collectively.

Fig. 3 shows one example of a search screen 41 displayed on the reservation subscriber terminal 4. This search screen 41 includes a time input field C11 and a place input field C12 to input the search starting-point time and the search starting-point place, respectively, as the search starting-point condition C1.

At the time input field C11, the reservation subscriber can input any time after the current time. When inputting the time of the next day or later, year-month-date as the target may be designated. As an optional function, the current time may be used as the search starting-point time instead of inputting time at the time input field C11. When the current time is to be used as the search starting-point time, the time when the reservation subscriber presses (selects, clicks, or taps) a search button B1 may be used for searching.

At the place input field C12, the reservation subscriber inputs information to specify the search starting-point place. Information to specify the place may include addresses, facility names, and latitude/longitude, for example. To input the place, the map may be shown to the reservation subscriber to allow them to designate the place on the map. As an optional function, the current position may be used as the search starting-point place instead of inputting the place at the place input field C12. The current position may be specified using a system to measure the position, such as GPS (Global Positioning System). When the current position is to be used, the measured position when the reservation subscriber presses the search button B1 may be used for searching.

The search screen 41 includes a time input field C21 and a place input field C22 to input the search ending-point time and the search ending-point place, respectively, as the search ending-point condition C2.

At the time input field C21, any time after the search starting-point time can be input. When inputting the time of the next day or later, year-month-date as the target may be designated.

At the place input field C22, the reservation subscriber inputs information to specify the search ending-point place. Information to specify the place may include addresses, facility names, and latitude/longitude, for example. To input the place, the map may be shown to the reservation subscriber to allow them to designate the place on the map. As an optional function, a specific place registered beforehand by the reservation subscriber, such as their home or their working place, or the current place may be used as the search ending-point place instead of inputting the place at the place input field C22.

The search screen 41 includes category selection fields C33 to C35 to allow the reservation subscriber to select categories as the plurality of categories C3 that they want to reserve. Events corresponding to the categories selected at the category selection fields C33 to C35 are the target of searching.

The number of the category selection fields is not limited to three. Instead, an additional button may be provided, for example, so as to allow the reservation subscriber to press this additional button and add a category selection field as needed. This allows the reservation subscriber to designate all of the desired categories for searching.

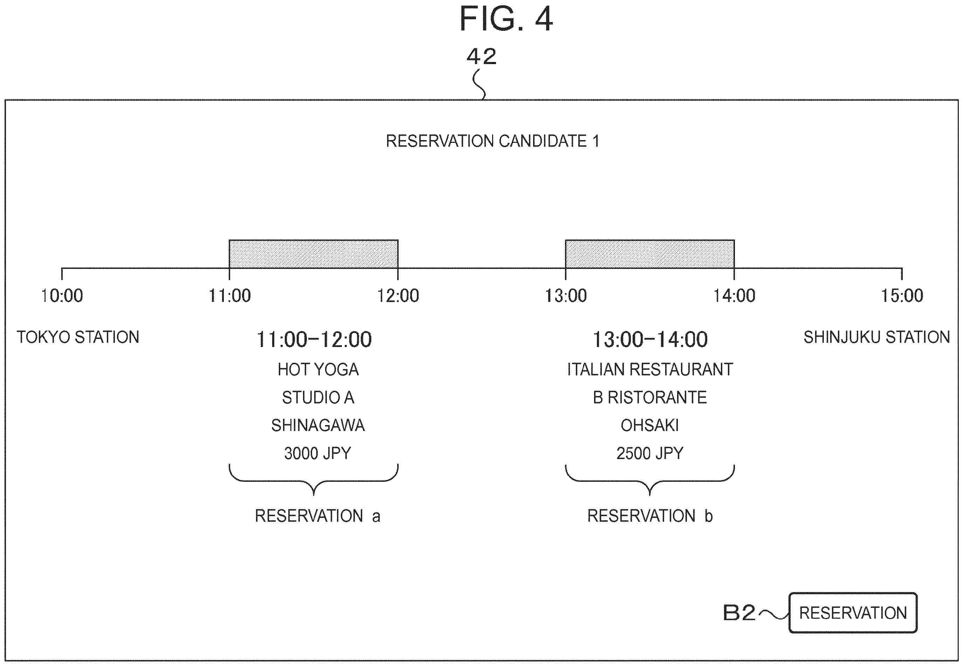

Referring next to Fig. 4, the following specifically describes the function to show events that can be reserved collectively to the reservation subscriber.

Fig. 4 shows one example of a reservation candidates screen 42 displayed on the reservation subscriber terminal 4. This reservation candidates screen 42 displays candidates for reservation including a plurality of events specified from the events searched on the search screen 41 of Fig. 3, and these events are displayed as the candidates of "events that can be reserved collectively".

A plurality of candidates, if any, can be displayed so that they are arranged side by side on the reservation candidate screen 42 (including scroll display). Not limited to this, the list of the plurality of reservation candidates are displayed as options, and one of the reservation candidate selected from the list may be displayed on the reservation candidate screen 42. Alternatively, a tab may be assigned to each reservation candidate on the reservation candidate screen 42. The reservation subscriber may select any one of the tabs to switch the reservation candidate screen 42 and see the plurality of reservation candidates. If a large number of reservation candidates exists, the candidates in preset number only may be displayed.

According to "reservation candidate 1" shown in Fig. 4 as one example, the reservation subscriber designates that he/she will be at "Tokyo station" at "10:00" as the starting point of searching and will be at "Shinjuku station" at "15:00" as the ending point of searching, and "yoga" or "restaurants" are designated as desired categories of reservation between these places, and this reservation candidate is shown as a result of such designation.

The "reservation candidate 1" in Fig. 4 includes an event of "reservation a" and an event of "reservation b" as the events that can be reserved collectively.

"Reservation a" shows that "hot yoga" at "studio A" located in "Shinagawa" can be reserved from "11:00" to "12:00", and shows "3000 yen" as the fee.

"Reservation b" shows that "B ristorante" as "Italian restaurant" located in "Ohsaki" can be reserved from "13:00" to "14:00", and shows that the average budget for this restaurant is "2500 yen".

Such "reservation candidate 1" including the event of "reservation a" and the event of "reservation b" can be specified as follows, for example.

Firstly, the range of area to be searched is calculated using "Tokyo station" as the search starting-point place, "Shinjuku station" as the search ending-point place, means for transport that is available between these places (e.g., trains, buses, cars, or walking), "10:00" as the search starting-point time, and "15:00" as the search ending-point time.

The range of area may be calculated based on means for transport that minimizes the travel time or may be calculated based on means for transport that is selected by the reservation subscriber. Alternatively the range of area may be calculated for each means for transport, and the reservation subscriber may select one of these calculated ranges of area.

Subsequently searching is performed for an event corresponding to "yoga" or "restaurants" as category and an event offered in the calculated area, and an event having a vacancy in the reservation slot from "10:00" to "15:00".

Next, the combination of a plurality of events that satisfy the search starting-point condition, the search ending-point condition and the designated categories is selected from the detected events.

As a result, reservation candidates including the event of "reservation a" and the event of "reservation b", for example, can be specified as the events that can be collectively reserved.

The following describes a method for specifying the event of "reservation a" in details. Firstly, the travel time between "Tokyo station" and "studio A" is calculated. The travel time may be calculated based on the means for transport as stated above and the distance between "Tokyo station" and "studio A", for example.

Next the time zone reachable at "studio A" after leaving "Tokyo station" at "10:00" is calculated based on the calculated travel time. This reachable time zone may include time for preparation to participate in the event after reaching "studio A" as allowance time.

Next, the calculated time zone is checked whether it includes a vacant reservation slot. As a result, the event of "reservation a" can be specified.

The following describes a method for specifying the event of "reservation b" in details. Firstly, the travel time between "studio A" and "B ristorante" is calculated. The travel time may be calculated based on the means for transport as stated above and the distance between "studio A" and "B ristorante", for example.

Next the time zone reachable at "B ristorante" after leaving "studio A" at "12:00" is calculated based on the calculated travel time. This reachable time zone may include time required for being seated after reaching "B ristorante" as allowance time.

Next, the calculated time zone is checked whether it includes a vacant reservation slot. As a result, the event of "reservation b" can be specified.

Such "reservation candidate 1" including thus specified event of "reservation a" and event of "reservation b" is displayed on the reservation candidate screen 42 in Fig. 4 and is shown to the reservation subscriber. Such reservation candidate screen 42 includes the search starting point, the event of "reservation a", the event of "reservation b" and the search ending time that are displayed in chronological order, and so is effective for checking the schedule as well.

The reservation subscriber may press button B2 for "reserve" on the reservation candidate screen 42 to reserve the event of "reservation a" and the event of "reservation b" displayed on the reservation candidate screen 42 collectively. The reservation processing module 221 then associates information on the event of "reservation a" and the event of "reservation b" with information on the reservation subscriber, and stores the associated information as one piece of reservation information 223 in the memory resource 22 of the reservation processing server 2.

As described above, the reservation processing system 1 according to the present embodiment allows the reservation subscriber to designate a search starting-point condition including a search starting-point time and a search starting-point place, a search ending-point condition including a search ending-point time and a search ending-point place, and a plurality of categories as the search condition. The reservation processing system then can specify events that can be reserved based on the designated search starting-point condition and the search ending-point condition and events that correspond to the designated plurality of categories by referring to the reservation event information 222, and can display the specified plurality of events in chronological order as events that can be reserved collectively to show the events to the reservation subscriber.

Accordingly the reservation processing system 1 of the present embodiment enables reservation of a plurality of events in different categories collectively. In other words, this processing enables reservation of events distributed over a plurality of categories collectively at one time.

The reservation processing system 1 of the present embodiment can accept the reservation of a plurality of events shown to the reservation subscriber and can manage the accepted reservation of the plurality of events as one collective reservation.

### [Modified Examples]

The present invention is not limited to the above-described embodiments, and may be embodied in other specific forms without deviating from the scope of the present invention. The present embodiment is therefore to be considered in all respects as illustrative and not restrictive. For instance, the order of the processing steps (steps) as described above can be changed or the processing steps can be executed in parallel as long as such a change does not cause inconsistency in the processing.

The above embodiment describes the case where the reservation receptionist terminal 3 and the reservation subscriber terminal 4 accesses a Web page of the reservation processing server 2 before processing, and such an access to a Web page is not always required. For instance, the reservation receptionist terminal 3 and the reservation subscriber terminal 4 may install a reservation processing application, and may implement various functions of the reservation processing system as described above. In this case, the reservation receptionist terminal 3 or the reservation subscriber terminal 4 may acquire the latest reservation event information and reservation information from the reservation processing server 2, may execute reservation processing, for example, based on the acquired latest information, and may transmit data processed by the reservation receptionist terminal 3 or the reservation subscriber terminal 4 to the reservation processing server 2.

A program of the present embodiment may be downloaded from various types of recording media (computer readable recording media) including an optical disk such as CD-ROM, a magnetic disk or a semiconductor memory or through a communication network, and the program then may be installed or loaded in a computer.

### Industrial Applicability

A reservation processing apparatus, a reservation processing method and a reservation processing program according to the present invention are suitable to reserve a plurality of events in different categories collectively.

### Reference Signs List

1 ...reservation processing system, 2...reservation processing server, 3...reservation receptionist terminal, 4...reservation subscriber terminal, 20...processor, 21 ...communication interface, 22...memory resource, 220...computer program, 221 ...reservation processing module, 222...reservation event information, 223...reservation information, N...network

## Claims

1. A reservation processing apparatus, comprising means for storing reservation event information at least containing event identification information that specifies an event to be reserved, a category of the event, a place to offer the event and time to offer the event;
means for allowing a user to designate a search condition, the search condition at least including a search starting-point condition that specifies a starting point of searching, a search ending-point condition that specifies an ending point of searching and a plurality of categories that the user wants to reserve;
means for referring to the stored reservation event information and specifying events that can be reserved based on the designated search starting-point condition and search ending-point condition and events that correspond to the designated plurality of categories; and
means for showing the specified plurality of events to the user as the events that can be reserved collectively.

2. The reservation processing apparatus according to claim 1, wherein the search starting-point condition includes time and a place as a starting point of searching, and the search ending-point condition includes time and a place as an ending point of the searching.

3. The reservation processing apparatus according to claim 2, wherein the means for specifying the events includes:
means for calculating travel time required to travel between the place as the starting point of the searching, a place to offer one or more of the events, and the place as the ending point of the searching;
means for calculating a range of area to be searched based on the travel time, the time as the starting point of the searching, the time as the ending point of the searching, and the time to offer the events;
means for detecting, from the reservation event information, events that are offered in the range of area to be searched, events that correspond to the designated plurality of categories, and events that can be reserved between the time as the starting point of the searching and the time as the ending point of the searching; and
means for specifying a combination of a plurality of events that satisfy the search starting-point condition, the search ending-point condition and the designated plurality of categories from the detected events.

4. The reservation processing apparatus according to claim 3, wherein the means for showing the events displays and shows the specified plurality of events in chronological order.

5. The reservation processing apparatus according to claim 3, further comprising means for accepting reservation of the displayed plurality of events.

6. The reservation processing apparatus according to claim 5, further comprising means for managing the accepted reservation of the plurality of events as one collective reservation.

7. A reservation processing method executed by a computer including a storage device configured to store reservation event information at least containing event identification information that specifies an event to be reserved, a category of the event, a place to offer the event and time to offer the event, the reservation processing method comprising:
a step of allowing a user to designate a search condition, the search condition at least including a search starting-point condition that specifies a starting point of searching, a search ending-point condition that specifies an ending point of searching and a plurality of categories that the user wants to reserve;
a step of referring to the stored reservation event information and specifying events that can be reserved based on the designated search starting-point condition and search ending-point condition and events that correspond to the plurality of categories designated; and
a step of showing the specified plurality of events to the user as the events that can be reserved collectively.

8. A reservation processing program that makes a computer function as:
means for storing reservation event information at least containing event identification information that specifies an event to be reserved, a category of the event, a place to offer the event and time to offer the event;
means for allowing a user to designate a search condition, the search condition at least including a search starting-point condition that specifies a starting point of searching, a search ending-point condition that specifies an ending point of searching and a plurality of categories that the user wants to reserve;
means for referring to the stored reservation event information and specifying events that can be reserved based on the designated search starting-point condition and search ending-point condition and events that correspond to the designated plurality of categories; and
means for showing the specified plurality of events to the user as the events that can be reserved collectively.
